# EUROPEAN PATENT APPLICATION

(11) **EP 1 918 058 A1**
(43) Date of publication of application: **07.05.2008**
(21) Application number: 07119154.8
(22) Date of filing: 24.10.2007
(51) Int. Cl.: B23K 15/06

(54) **High temperature electron beam welding**

(30) Priority: 02.11.2006 US 591466
(71) Applicant: General Electric Company, Schenectady, NY 12345 (US)
(72) Inventor: Arnett, Michael Douglas, Simpsonville, SC 29681 (US); Nowak, Daniel, Greenville, SC 29607 (US); Dimascio, Paul S., Greer, SC 29650 (US)
(74) Representative: Szary, Anne Catherine

(57) **Abstract**

A method of welding superalloy components (16, 18) comprising: preheating one or more components to be welded to a target temperature of at least 1500°F in a vacuum chamber; welding the one or more preheated components in a weldment region (20) utilizing an electron beam (12), while maintaining the target temperature until welding is completed.

## Description

This invention relates to welding techniques and more specifically, to electron beam welding of nickel or cobalt based superalloy components.

### BACKGROUND OF THE INVENTION

Electron beam welding is increasingly being used to join subcomponents on superalloy gas turbine components, particularly, on buckets and nozzles. These components are frequently made from very high strength nickel or cobalt alloys that are difficult to weld. Oftentimes, ductile fillers or shims are used to reduce the cracking propensity in the weld fusion zone and heat-affected zone, but these techniques reduce the mechanical capability of the weld relative to the base metal.

In the fabrication and repair of the gas turbine buckets using gas arc welding (GTAW), very high temperature involve preheats have been in use for some time. Current methods preheating of bucket tips by radiant or induction heating to temperatures in excess of 1500°F. This enables the use of high strength fillers to produce welds with mechanical properties similar to the base material of the bucket.

Current methods for preheating electron beam welds involve running the electron beam over the part at lower power to locally increase the temperature of the part. Temperature is less controllable using this method as it will vary greatly from one part to the next due to variation in the geometries of the parts. In addition, the preheat is not maintained during welding since the heating ceases when welding begins. Finally, since the electron beam is only applied to a single moving spot, and since the part is losing heat rapidly to conduction and radiation, the maximum temperature that can be reached is comparatively low.

### BRIEF DESCRIPTION OF THE INVENTION

In an exemplary embodiment described herein, an electron beam welding process is provided for nickel or cobalt based superalloy components that includes locally preheating the part in situ prior to and during welding. Resistance, induction or radiant heating may be employed, and the heating system must be capable of raising the temperature of the component part to be welded to at least 1500°F and up to incipient melting of the base alloy and/or filler material. During welding, the component being welded is maintained at the elevated temperature, enabling welding of very highly alloyed base metals using matching strength and chemistry filler metals.

Accordingly, in its broader aspects, the present invention relates to a method of welding superalloy components comprising: preheating one or more components to be welded to a target temperature of at least 1500°F in a vacuum chamber; welding the one or more preheated components in a weldment region utilizing an electron beam, while maintaining the target temperature until welding is completed.

In another aspect, the invention relates to a method of welding superalloy turbine components comprising: preheating the one or more components to be welded to a pre-heat target temperature of at least 1500°F in a vacuum chamber, the preheating carried out using induction coils, resistance heaters or radiant lamps; supplying a filler metal to a weld zone; welding the one or more preheated components utilizing an electron beam, while maintaining the target temperature until the welding is completed.

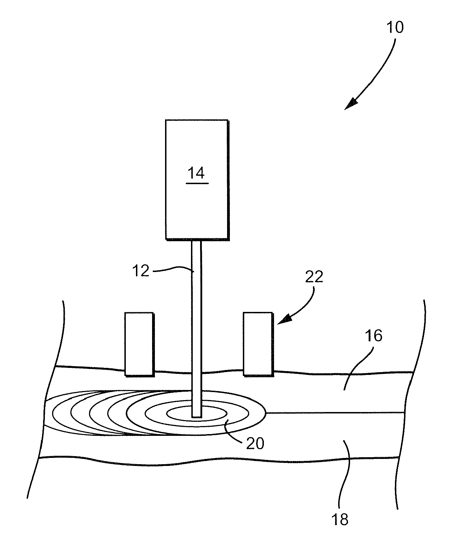

The invention will now be described in detail in connection with the Figure 1 which is a schematic drawing of an electron beam welding and preheat configuration in accordance with an exemplary embodiment of the invention.

### DETAILED DESCRIPTION OF THE INVENTION

With reference to the Figure 1, an electron beam welding apparatus 10 is shown by which an electron beam 12 generated by an electron beam gun 14 is directed at an interface formed by opposing surfaces of components 16, 18 to be joined. The beam 12 produces a weldment region (or simply a weldment) 20 that metallurgically joins the components. The components 16, 18 may be formed of a variety of metal alloys including those that are relatively difficult to weld such as precipitation strengthened nickel or cobalt-based superalloys used to form cast turbine components.

The welding process is typically performed in an atmosphere suitable for electron beam welding, i.e., at a suitable vacuum level necessary to prevent electron scattering and rapid oxidation of the base metal. The specific vacuum level as well as other parameters including pulsed current frequency of the electron beam and travel speed are known in the art and need not be described herein. In accordance with an exemplary and non-limiting embodiment, a preheat system is located within the vacuum chamber. The preheat system is capable of locally heating the workpiece to at least 1500°F and up to incipient melting of the base alloy and/or filler (in some cases greater than 2000°F) (also referred to as the "target temperature") and greater. The preheat system can employ induction coils, resistance heaters, or radiant (quartz) lamps, generally indicated in schematic form at 24, to heat the components while at the same time permitting beam access to the region to be welded. It will be appreciated that the vacuum chamber requires multiple electrical feed-throughs to provide power to the preheat system and to monitor the temperature.

In the event two components are to be welded (the invention also applied to, for example, repair of a single component), the joining can be accomplished autogenously (without filler materials), or by using one or more preplaced shims or wire fed filler material. Filler metals can have any range of capability, from highly ductile to very high strength.

During welding, the temperature of the one or more components 16, 18 is elevated to the target temperature prior to energizing electron beam. The target temperature is maintained during welding, and heating ceases only upon completion of the welding process. After welding, the preheat system may be shut off, or it may remain in a controlled heating mode after welding and used to stress relieve the weld to avoid cracking upon cooling.

The process described herein overcomes problems with prior preheating techniques used in conjunction with electron beam welding where the electron beam itself is run over the part at low part to locally increase the temperature of the part. The preheat process employed herein is considerably more controllable, allowing the operator to maintain a substantially uniform temperature of the one or more components through the entire welding process, independent of the electron beam itself.

While the invention has been described in connection with what is presently considered to be the most practical and preferred embodiment, it is to be understood that the invention is not to be limited to the disclosed embodiment, but on the contrary, is intended to cover various modifications and equivalent arrangements included within the scope of the appended claims.

## Claims

1. A method of welding superalloy components comprising:
preheating one or more components to be welded to a target temperature of at least 816°C (1500°F) in a vacuum chamber;
welding the one or more preheated components in a weldment region utilizing an electron beam, while maintaining said target temperature until welding is completed.

2. The method of claim 1 wherein, prior to welding, a filler is supplied to the weldment region.

3. The method of claim 2 wherein said filler comprises a wire-fed filler metal.

4. The method of claim 2 wherein said filler comprises one or more preplaced metal shims.

5. The method of any preceding claim wherein preheating is carried out with induction coils, resistance heaters or radiant lamps.

6. The method of claim 2 wherein said target temperature is between 816°C (1500°F) and incipient melting of said one or more components and/or said filler.

7. The method of any preceding claim wherein said target temperature is greater than 1093°C (2000°F).

8. The method of any preceding claim wherein, after welding, a controlled heating mode is maintained to stress relieve the weld.

9. The method of any preceding claim wherein said superalloy components comprise high strength nickel or cobalt-based alloys.

10. The method of any preceding claim comprising:
preheating the one or more components to be welded to a pre-heat target temperature of at least 1500°F in a vacuum chamber, said preheating carried out using induction coils, resistance heaters or radiant lamps;
supplying a filler metal to a weld zone;
welding the one or more preheated components utilizing an electron beam, while maintaining said target temperature until the welding is completed.
